# EUROPEAN PATENT APPLICATION

(11) **EP 1 903 792 A2**
(43) Date of publication of application: **26.03.2008**
(21) Application number: 07113178.3
(22) Date of filing: 26.07.2007
(51) Int. Cl.: H04N 5/445

(54) **Display Apparatus and Broadcasting Signal Display Method Thereof**

(30) Priority: 25.09.2006 KR 20060092683
(71) Applicant: SAMSUNG ELECTRONICS CO., LTD., Suwon-si, Gyeonggi-do (KR)
(72) Inventor: Choi, Jin-su, Seocho-gu Seoul (KR)
(74) Representative: Robinson, Ian Michael

(57) **Abstract**

A display apparatus includes: a display unit (20); a receiving unit (10) which receives a broadcasting signal including a program having a viewer rating and extracts the viewer rating from the program; an image processor (60) which performs image processing on the received program; and a controller (70) which compares a user-specific viewable rating with the extracted viewer rating, and controls the image processor (60) to display a predetermined image when the extracted viewer rating is not included in the viewable rating.

## Description

### BACKGROUND OF THE INVENTION

### Field of the Invention

Apparatuses and methods consistent with the present invention relate to a display apparatus and a broadcasting signal display method thereof. More particularly, they relate to a display apparatus that displays an image according to viewer ratings, and a broadcasting signal display method thereof.

### Description of the Related Art

A display apparatus receives a broadcasting signal broadcasted from a broadcasting station and displays the received broadcasting signal in the form of a viewable image.

With the emergence of digital broadcasting, a display apparatus such as a digital television, provides a user with viewer rating information corresponding to a predetermined program, so that the user can decide whether a given channel and a given program is viewable based on the delivered viewer rating information.

Accordingly, when a viewer rating of a program included in the broadcasting signal is not included in a viewable rating, a message indicating that the user cannot view the corresponding program is displayed on a screen.

However, when the viewer rating of the program is not included in the viewable rating, a conventional display apparatus cannot efficiently display the broadcasting signal, since the conventional display apparatus displays only a message indicating that the program cannot be viewed.

Moreover, viewable ratings cannot be individually set for a plurality of users. Therefore, an appropriate viewable rating cannot be set for each user. The viewable rating also cannot be edited.

### SUMMARY OF THE INVENTION

According to the present invention there is provided an apparatus and method as set forth in the appended claims. Other features of the invention will be apparent from the dependent claims, and the description which follows.

An aspect of the present invention provides a display apparatus and a broadcasting signal display method thereof, which can automatically display programs and content appropriate to a viewable rating of each user, by displaying another predetermined video signal when a viewer rating of a given program is not included in a viewable rating of a user.

Another aspect of the present invention provides a display apparatus and a broadcasting signal display method, which can set viewable ratings for a plurality of users, so that a viewable rating for each user can be individually determined.

Additional aspects and/or advantages of the invention will be set forth in part in the description which follows and, in part, will be obvious from the description, or may be learned by practice of the invention.

The foregoing and/or other aspects of the present invention are achieved by providing a display apparatus comprising: a display unit; a receiving unit which receives a broadcasting signal including a program having a viewer rating and extracts the viewer rating from the program; an image processor which performs image processing on the received program; and a controller which compares a user-specific viewable rating with the extracted viewer rating, and controls the image processor to display a predetermined image when the extracted viewer rating is not included in the viewable rating of the user.

According to another exemplary embodiment of the present invention, the predetermined image comprises an image of another program whose viewer rating is included in the viewable rating of the user.

According to another exemplary embodiment of the present invention, the display apparatus further comprises a storage unit, wherein the predetermined image comprises an image of another program stored in the storage unit, excluding the received program.

According to another exemplary embodiment of the present invention, the display apparatus further comprises a user input unit, wherein the controller receives a plurality of types of viewer information including identifier (ID) information and viewable rating information of a user through the user input unit, and stores the received viewer information in the storage unit.

According to another exemplary embodiment of the present invention, the controller controls editing of the viewer information.

According to another exemplary embodiment of the present invention, the controller stores the viewer information in a file format.

According to another exemplary embodiment of the present invention, the display apparatus further comprises a data interface which transmits and receives data to/from an external device, wherein the controller controls to receive the viewer information through the data interface.

According to another exemplary embodiment of the present invention, the controller sets the viewable rating to a lowest viewable level when no viewer information is input through the user input unit.

According to another exemplary embodiment of the present invention, the display apparatus further comprises a user interface (UI) generator, which generates a UI corresponding to the viewer information, wherein the controller controls the image processor to display a predetermined image on the display unit using the generated UI.

According to another exemplary embodiment of the present invention, the UI generator further generates UIs corresponding to a channel list and a sub-information list, respectively corresponding to a viewable rating of a user, and the controller controls the image processor to select one of a channel and sub-information that correspond to the viewable rating, that were selected from the user input unit using the UIs, from the channel list and the sub-information list when the extracted viewer rating of the program is not included in the viewable rating.

According to another exemplary embodiment of the present invention, the UI generator further generates a UI corresponding to a first viewing mode which displays a broadcasting signal based on the viewer rating included in the received broadcasting signal, and a UI corresponding to a second viewing mode which displays a broadcasting signal based on the viewable rating included in the viewer information input by a user, and the controller controls the image processor to display the predetermined image on the display unit based on a viewing mode selected through the UI.

The foregoing and/or other aspects of the present invention are achieved by providing a broadcasting signal display method of a display apparatus, the broadcasting signal display method comprising: receiving a broadcasting signal including a program having a viewer rating; extracting the viewer rating from the received program; comparing a user-specific viewable rating with the extracted viewer rating of the received program; and displaying a predetermined image, if the extracted viewer rating of the received program is not included in the viewable rating of the user.

According to another exemplary embodiment of the present invention, the predetermined image comprises an image of another program whose viewer rating is included in the viewable rating of the user.

According to another exemplary embodiment of the present invention, the predetermined image comprises a stored image of another program, excluding the received program.

According to another exemplary embodiment of the present invention, the comparing of the viewer rating further comprises receiving a plurality of types of viewer information including identifier (ID) information and viewable rating information of a viewer from a user and storing the received viewer information.

According to another exemplary embodiment of the present invention, the viewer information is editable.

According to another exemplary embodiment of the present invention, the comparing of the viewer rating comprises setting the viewable rating to a lowest viewable rating level when no viewer information is input from the user.

According to another exemplary embodiment of the present invention, the comparing of the viewer rating further comprises displaying a channel list and a sub-information list, respectively corresponding to a viewable rating of the user, when the extracted viewer rating of the received program is not included in the viewable rating of the user, and the displaying of the predetermined image comprises selecting one of the channels and sub-information from the channel list and sub-information list that correspond to the viewable rating of the user, and displaying the corresponding image.
According to another exemplary embodiment of the present invention, the comparing of the viewer rating further comprises receiving one of a first viewing mode and a second viewing mode, the first viewing mode displaying a broadcasting signal based on a viewer rating included in the received broadcasting signal, the second viewing mode displaying a broadcasting signal based on the viewable rating included in the viewer information input from the user, and the displaying of the predetermined image comprises displaying an image based on the input viewing mode.

### BRIEF DESCRIPTION OF THE DRAWINGS

These and other aspects of the present invention will become apparent and more readily appreciated from the following description of the embodiments, taken in conjunction with the accompany drawings of which:
FIG. 1 is a block diagram of a configuration of a display apparatus according to an exemplary embodiment of the present invention;
FIG. 2A and FIG. 2B respectively show a user interface of the display apparatus according to an exemplary embodiment of the present invention; and
FIG. 3 is a flowchart of a broadcasting signal display process according to an exemplary embodiment of the present invention.

### DETAILED DESCRIPTION OF EXEMPLARY EMBODIMENTS

Reference will now be made in detail to exemplary embodiments of the present invention, which are illustrated in the accompanying drawings, wherein like reference numerals refer to like elements throughout. The embodiments are described below so as to explain the present invention by referring to the figures.

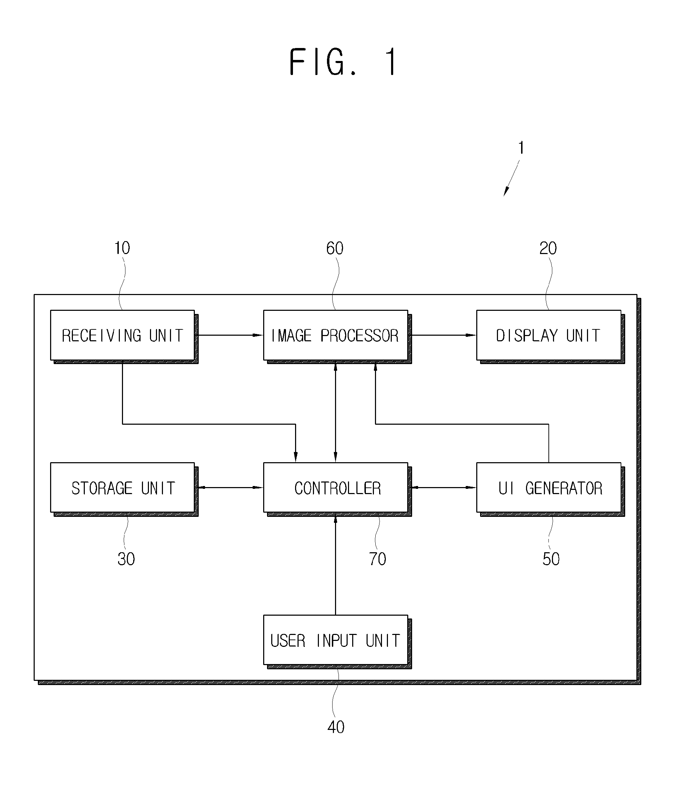

A display apparatus 1 according to an exemplary embodiment of the present invention will be described in more detail with reference to FIG. 1.

As shown in FIG. 1, the display apparatus 1 includes a receiving unit 10, a display unit 20, a storage unit 30, a user input unit 40, a user interface (UI) generator 50, an image processor 60, and a controller 70.

The display apparatus 1 according to an exemplary embodiment of the present invention may be provided as a digital television that receives and displays a digital broadcasting signal.

The receiving unit 10 receives a broadcasting signal that includes a viewer-rated program and extracts the viewer rating of the received program. The broadcasting signal is transmitted in a stream format, such as a MPEG transport stream (MTS), and received by the receiving unit 10. The receiving unit 100 restores the received MTS to original video and audio signals. In this case, the receiving unit 10 may also be realized as a tuner.

The display unit 20 displays an image based on a video signal processed by the image processor 60. The display unit 20 may be realized as a cathode ray tube (CRT), a liquid crystal display (LCD), a plasma display panel (PDP), a digital light processing (DLP) device, a surface-conduction electron-emitter display (SED), and a field emission display (FED), etc.

The storage unit 30 stores a plurality of types of sub-information. Herein, the plurality of types of sub-information other than a main program of the channel being broadcasted includes content such as an application received by the receiving unit 10, an e-book, etc.

The storage unit 30 may be realized as a memory card or as an electrically erasable programmable read only memory (EEPROM). Also, when the storage unit 30 is realized as a hard disk (e.g., equipped in a personal video recorder, PVR), the sub-information may be stored in the hard disk.

The user input unit 40 receives viewer information from the user according to control of the controller 70. Herein, the viewer information may include a viewer identifier (ID) of a viewer and viewer rating information of the user. Based on the viewer information, the display apparatus 1 displays a program that is appropriate for a viewer rating of the user.

In addition, when a viewer rating of the main program included in the broadcasting signal is not included in a viewable rating of the user, the user may select a channel and sub-information, from a channel list and a sub-information list that include channels and sub-information appropriate to the viewable rating of the user. Here, not only the main program but also the contents in the sub information are assumed assigned with a rating.

The UI generator 50 generates a UI corresponding to the viewer information and a UI corresponding to an image mode according to a viewer rating. The UI corresponding to the viewer information includes a first sub UI for receiving an ID of a user, and a second sub UI for receiving a viewer rating of the user. In addition, the UI generator 50 may generate a UI for displaying a user and a user's viewer rating, a UI for displaying a channel list and a sub-information list that correspond to the viewable rating of the user, and a UI for selecting an image mode according to a viewer rating. The UIs generated by the UI generator 50 will be described in further detail later.

The image processor 60 performs image processing on a program received by the receiving unit 10. In addition, the image processor 60 receives the UI generated by the UI generator 50 according to a control of the controller 70, and generates an image including the UI and displays the generated image on the display unit 20.

The image processor 60 according to an exemplary embodiment of the present invention may perform decoding for extracting video information from an input video signal, scaling for adjusting resolution of the decoded image according to characteristics of the display unit 20 and user settings, and picture enhancement for improving quality of the image.

The controller 70 compares a user-specific viewable rating and a viewer rating of the program received by the receiving unit 10, and controls the image processor 60 to display a predetermined image on the display unit 20, when the viewer rating of the received program is not included in the viewable rating of the user.

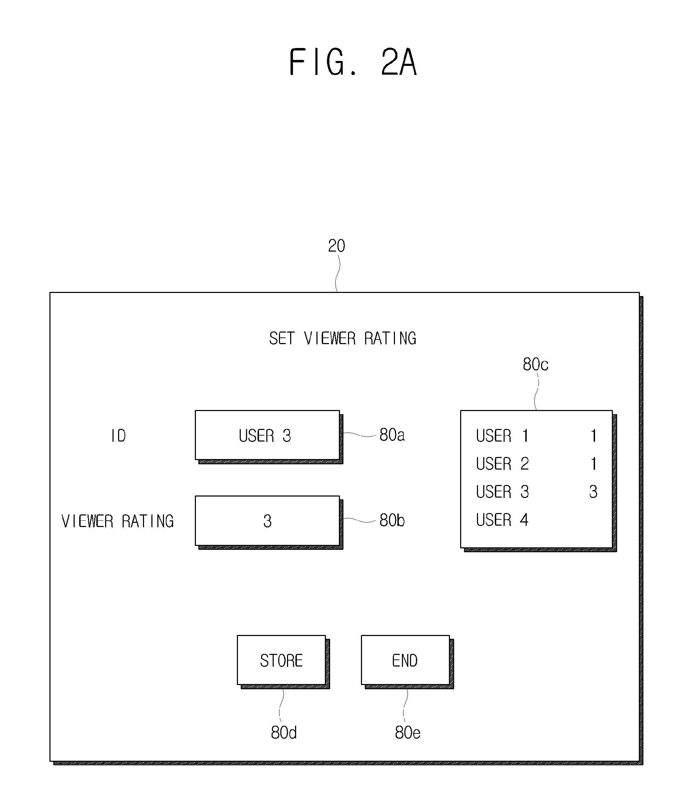

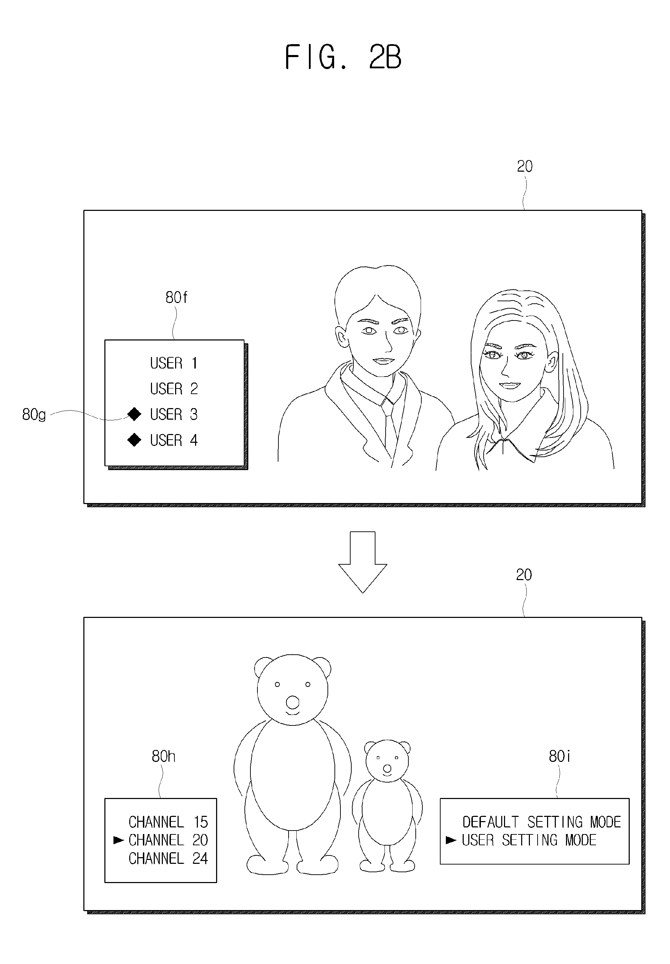

Referring to FIG. 2A and FIG. 2B, configuration of the controller 70 of the display apparatus 1 according to an exemplary embodiment of the present invention will be described in more detail, together with a UI.

FIG. 2A shows a UI for setting a viewer rating of each user.

As shown in FIG. 2A, the UI includes an ID interface 80a, a viewer rating interface 80b, an interface image 80c, a storage interface 80d, a termination interface 80e.

A user inputs a user's ID through the ID interface 80a and enters a viewable rating corresponding to the user, through the viewer rating interface 80b. The interface image 80c displays all input users' names and corresponding viewable ratings. The storage interface 80d stores input data, and the termination interface 80e terminates the input operation.

As shown in Fig. 2B, the interface image 80f indicates whether a program is viewable based on the viewer rating of the user, the view forbidden icon 80g indicates that a viewer rating of a program is not included in the viewable rating of the user, and the list interface 80h displays a list of channels included in the viewable rating of the user. The user can select an image mode through the image mode interface 80i.

In this case, a user who can set a viewable rating has administration authority, and the authorized user enters an ID of each user through the ID interface 80a and enters a viewable rating corresponding to the input user through the viewer rating interface 80b. When the authorized user enters an ID and a viewable rating corresponding to the ID, the input information is displayed on the interface image 80c. When the authorized user terminates the user information input operation and selects information storing operation through the storage interface 80d, the controller 70 stores the input information in the storage unit 30.

Herein, the controller 70 may control editing of the viewer information stored in the storage unit 30 through the user input unit 40. The controller may also store the viewer information in a file format in the storage unit 30.

The display apparatus 1 according to an exemplary embodiment of the present invention may further include a data interface (not shown) for externally receiving viewer information. When receiving predetermined instructions, the controller 70 may transmit/receive the viewer information through the data interface to/from an external device. The data interface may include a wired interface such as a universal serial bus (USB), a wireless interface such as a wireless local area network (WLAN), etc.

When no viewer information is input either through the user input unit 40 or the data interface, the controller 70 may set a viewable rating of each user to a predetermined lowest rating level.

FIG. 2B shows a UI for indicating that a viewer rating of a received program is not included in the viewable rating of a user. The controller 70 controls the image processor 60 to display an interface image 80f at a predetermined location on the display unit 20. The interface image 80f indicates whether a program of a channel selected by the user from among the programs included in the broadcasting signal received by the receiving unit 10, is included in the viewable rating of the user.

When the program displayed on the display unit 20 is not included in the viewable rating of the user, the controller 70 controls the image processor 60 to display the view forbidden icon 80g and to display another program included in the viewable rating of the user on the display unit 20. In this case, the controller 70 may control the image processor 60 to display sub-information stored in the storage unit 30 on the display unit 20, instead of the program received by the receiving unit. Accordingly, when the received program is not included in the viewable rating of the user, another image can be displayed on the display unit 20 such that a program and contents included in the viewable rating of the user are automatically provided.

When a plurality of channels are included in the viewable rating of the user, the controller 70 controls the list interface 80h to display a list of the plurality of channels on the display unit 20, so that the user can select a channel from the plurality of channels through the list interface 80h. When no channel is included in the viewable rating of the user, the controller 70 may control the image processor 60 to display a list interface with a list of sub-information included in the viewable rating of the user.

In addition, the controller 70 displays the image mode interface 80i on display unit 20, and controls the image processor 60 to display an image on the display unit 20 based on a viewer rating included in a broadcasting signal when the user selects a default mode from the image mode interface 80i through the user input unit 40, and controls the image processor 60 to display an image on the display unit 20 based on a viewer rating set for each user when the user selects a user setting mode.

Accordingly, the display apparatus 1 can display various images according to viewer ratings.

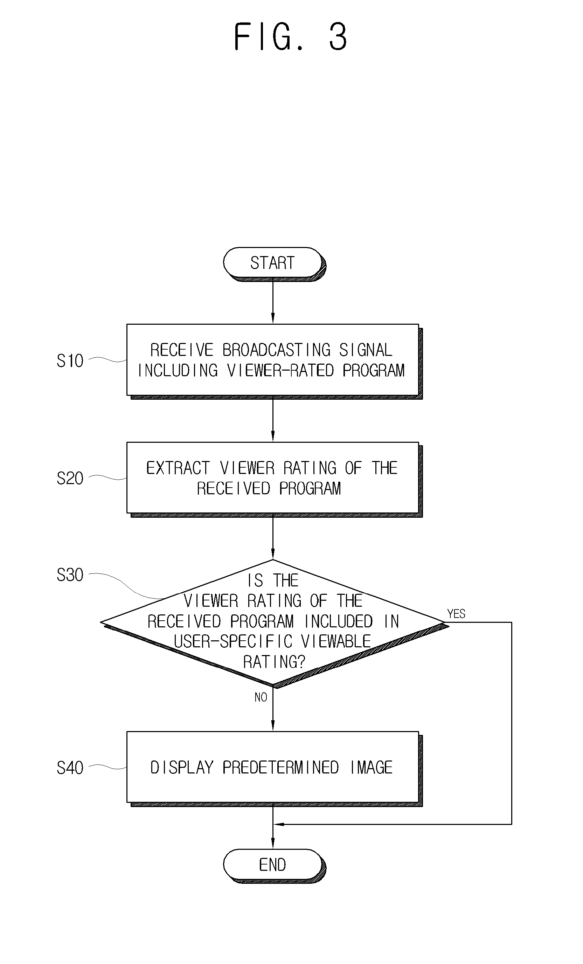

Hereinafter, a broadcasting signal display method of the display apparatus 1 according to an exemplary embodiment of the present invention will be described in more detail with reference to FIG. 3.

The receiving unit 10 receives a broadcasting signal including programs, each having a viewer rating (S10).

When the broadcasting signal is received in S10, the controller 70 extracts a viewer rating of a program selected and viewed by a user from the received broadcasting signal (S20).

The controller 70 determines whether the extracted viewer rating of the program is included in the viewable rating of the user, and displays a predetermined image corresponding to a viewable rating of the user, when the extracted viewer rating is not included in the viewable rating of the user (S30).

Herein, the predetermined image may include another program included in the viewable rating, and may also include sub-information stored in the storage unit 30, excluding the received program.

When the extracted viewer rating of the program is not included in the viewable rating of the user, the controller 70 may further control to display a channel list and a sub-information list corresponding to a viewable rating of the user, and display an image of a program corresponding to a channel and sub-information selected by the user.

In operation S20, the controller 70 may further control to receive a plurality of types of viewer information from the user, including an ID of a user and a viewable rating of the user, and display a predetermined image based on the viewer information input by the user.

In addition, the controller 70 may further control to receive one of a first viewing mode and a second viewing mode before determining whether the extracted viewer rating is included in the viewable rating of the user in operation S20. Herein, the first viewing mode display a broadcasting signal based on a viewer rating included in the received broadcasting signals, and the second viewing mode displays a broadcasting signal based on a viewer rating included in viewer information input by the user.

When a default setting mode is selected, an image is displayed on the basis of the viewer rating included in the received broadcasting signal, and when user-desired mode is selected, an image is displayed on the basis of the viewable rating included in a plurality of viewer ratings respectively set by the plurality of users.

As described, the display apparatus and the broadcasting signal display method of the display apparatus according to the present invention display a predetermined video signal when a viewer rating of a given program is not included in a viewable rating of the user, thereby automatically providing a program and contents that correspond to the viewable rating of the user, and provide for viewable ratings of a plurality of users to be set individually.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a display unit (20);
a receiving unit (10) which receives a broadcasting signal including a program having a viewer rating, and extracts the viewer rating from the received program;
an image processor (60) which performs image processing on the received program; and
a controller (70) which compares a user-specific viewable rating with the extracted viewer rating, and controls the image processor (60) to display a predetermined image when the extracted viewer rating is not included in the viewable rating of the user.

2. The display apparatus of claim 1, wherein the predetermined image comprises an image of another program whose viewer rating is included in the viewable rating of the user.

3. The display apparatus of claim 1, further comprising a storage unit (30),
wherein the predetermined image comprises an image of another program stored in the storage unit (30), excluding the received program.

4. The display apparatus of claim 3, further comprising a user input unit (40),
wherein the controller (70) receives a plurality of types of viewer information including identifier (ID) information, and viewable rating information of a viewer through the user input unit (40), and stores the received viewer information in the storage unit (30).

5. The display apparatus of claim 4, wherein the controller (70) controls editing of the viewer information.

6. The display apparatus of claim 4, wherein the controller (70) stores the viewer information in a file format.

7. The display apparatus of claim 6, further comprising a data interface which transmits data to an external device and receives data from the external device
wherein the controller (70) controls to receive the viewer information through the data interface.

8. The display apparatus of claim 4, wherein the controller (70) sets the viewable rating to a lowest viewable level when no viewer information is input through the user input unit (40).

9. The display apparatus of claim 4, further comprising a user interface (UI) generator (50) which generates a UI corresponding to the viewer information,
wherein the controller (70) controls the image processor (60) to display the predetermined image on the display unit (20) using the generated UI.

10. The display apparatus of claim 9, wherein the UI generator (50) further generates UIs displaying a channel list and a sub-information list, respectively corresponding to the viewable rating, and the controller (70) controls the image processor (60) to select one of a channel and sub-information that correspond to the viewable rating of the user, selected from the user input unit (40) using the UIs, respectively corresponding to the channel list and the sub-information list when the extracted viewer rating of the program is not included in the viewable rating.

11. The display apparatus of claim 9, wherein:
the UI generator (50) further generates a UI corresponding to a first viewing mode which displays a broadcasting signal based on the viewer rating included in the received broadcasting signal, and a UI corresponding to a second viewing mode which displays a broadcasting signal based on the viewable rating included in the viewer information input by a user, and
the controller (70) controls the image processor (60) to display the predetermined image on the display unit (20) based on a viewing mode selected through the UI.

12. A broadcasting signal display method of a display apparatus, the broadcasting signal display method comprising:
receiving a broadcasting signal including a program having a viewer rating;
extracting the viewer rating from the received program;
comparing a user-specific viewable rating with the extracted viewer rating of the received program; and
displaying a predetermined image, if the extracted viewer rating of the received program is not included in the viewable rating of the user.

13. The broadcasting signal display method of claim 12, wherein the predetermined image comprises an image of another program whose viewer rating corresponds to the viewable rating.

14. The broadcasting signal display method of claim 12, wherein the predetermined image comprises a stored image, excluding the received program.

15. The broadcasting signal display method of claim 12, wherein the comparing of the viewer rating further comprises receiving a plurality of types of viewer information including identifier (ID) information and viewable rating information of a viewer from a user and storing the received viewer information.

16. The broadcasting signal display method of claim 15, wherein the viewer information is editable.

17. The broadcasting signal display method of claim 16, wherein the comparing of the viewer rating comprises setting the viewable rating to a lowest viewable rating level when no viewer information is input from the user.

18. The broadcasting signal display method of claim 16, wherein the comparing of the viewer rating further comprises displaying a channel list and a sub-information list, respectively corresponding to the viewable rating when the extracted viewer rating of the received program is not included in the viewable rating, and
the displaying of the predetermined image comprises selecting one of a channel and sub-information that correspond to the viewable rating, selected by the user from among the channel list and the sub-information list, and displaying the corresponding image.

19. The broadcasting signal display method of claim 16, wherein the comparing of the viewer rating further comprises receiving one viewing mode of a first viewing mode and a second viewing mode, the first viewing mode displaying a broadcasting signal based on the viewer rating included in the received broadcasting signal, the second viewing mode displaying a broadcasting signal based on the viewable rating included in the viewer information input from the user, and
the displaying of the predetermined image comprises displaying an image based on the input viewing mode.
